# EUROPEAN PATENT APPLICATION

(11) **EP 4 786 896 A1**
(43) Date of publication of application: **05.08.2026**
(21) Application number: 24871536.9
(22) Date of filing: 08.08.2024
(51) Int. Cl.: F25D 23/02, F25D 23/08

(54) **PACKING MATERIAL FOR VACUUM INSULATING GLASS AND DOOR FOR REFRIGERATION CASE**

(30) Priority: 27.09.2023 JP 2023164167
(71) Applicant: Panasonic Housing Solutions Co., Ltd., Kadoma-shi, Osaka 571-8686 (JP)
(72) Inventor: INAKI, Yuko, Fukui-shi, Fukui 918-8585 (JP); YAMAMOTO, Kenya, Fukui-shi, Fukui 918-8585 (JP); KAMATA, Yasuhiro, Fukui-shi, Fukui 918-8585 (JP); OFUJI, Masaaki, Kadoma-shi, Osaka 571-8686 (JP)
(74) Representative: Müller-Boré & Partner Patentanwälte PartG mbB
(86) International application number: PCT/JP2024/028527
(87) International publication number: WO 2025/069734

(57) **Abstract**

Provided are a vacuum insulated glass sealing member allowing for reducing, even if a vacuum insulated glass unit bends due to a temperature difference, the chances that a gap appears between a door configured as a frame member supporting the vacuum insulated glass unit and a refrigerated showcase body to cause a decline in its thermal insulation properties and a refrigerated display case door including such a sealing member. A vacuum insulated glass sealing member 21 includes a base portion 22 and a flexible portion 23 having a side end portion fixed to the base portion 22. The base portion 22 has a polygonal cross section perpendicular to a longitudinal axis of the base portion 22. The flexible portion 23 has an arcuate cross section perpendicular to a longitudinal axis of the flexible portion 23. The flexible portion 23 has a lower hardness than the base portion 22.

## Description

### Technical Field

The present disclosure generally relates to a vacuum insulated glass sealing member and a refrigerated display case door using the same.

### Background Art

Among various types of refrigerated display cases for preserving foods and other stuffs at low temperatures, a refrigerated showcase for use as a showcase for selling products at a shop often includes an opening and closing door (hereinafter referred to as a "a refrigerated display case door") including a transparent glass pane fixed by a metallic frame member so that the products stored therein can be seen and recognized from outside the case.

In such a refrigerated display case door, external light entering the refrigerated display case through the glass pane and the heat transferred from the outside air through the glass pane are likely to cause an increase in the temperature inside the refrigerated display case. Therefore, it is preferable to use a glass pane with excellent thermal insulation properties as the glass pane for refrigerated display case doors.

In recent years, it is proposed to use vacuum insulated glass as such a glass pane for refrigerated display case doors (refer to, for example, Patent Documents 1 and 2). The vacuum insulated glass is not so thick but still has excellent thermal insulation properties, which can keep stuffs inside the refrigerated display case clearly seen and recognized from outside the case.

### Citation List

### Patent Literature

Patent Document 1: JP 2009-236366 A
Patent Document 2: JP 2010-063536 A

### Summary of Invention

However, in a situation where thin vacuum insulated glass is used for the refrigerated display case door, the thin vacuum insulated glass, of which the periphery is supported by the frame member, is likely to bend such that a center portion thereof protrudes outward. This is because the glass pane has a significant temperature difference between the inside of the case and the outside of the case.

This often causes a gap between the frame member supporting the vacuum insulated glass and the refrigerated showcase body, thus eventually causing a decline in its thermal insulation properties, which is a problem with the known art.

In view of the foregoing background, it is therefore an object of the present disclosure to reduce, even if the vacuum insulated glass bends due to the temperature difference, the chances that such a gap appears between the frame member supporting the vacuum insulated glass and the refrigerated showcase body to cause a decline in its thermal insulation properties.

A vacuum insulated glass sealing member according to an aspect of the present disclosure includes a base portion and a flexible portion having a side end portion fixed to the base portion. The base portion has a polygonal cross section perpendicular to a longitudinal axis of the base portion. The flexible portion has an arcuate cross section perpendicular to a longitudinal axis of the flexible portion. The flexible portion has a lower hardness than the base portion.

A refrigerated display case door according to another aspect of the present disclosure includes: the vacuum insulated glass sealing member described above; a frame member having not only a U-cross section perpendicular to a longitudinal axis of the frame member but also a first surface and a second surface that face each other; and a vacuum insulated glass unit. The base portion of the vacuum insulated glass sealing member is fixed to the first surface of the frame member. A peripheral edge portion of the vacuum insulated glass unit is held between the second surface of the frame member and the flexible portion.

### Brief Description of Drawings

[FIG. 1] FIG. 1 is a perspective view of a refrigerated display case door using a vacuum insulated glass sealing member according to one embodiment of the present disclosure;
[FIG. 2] FIG. 2 is an enlarged cross-sectional view, taken along the plane D shown in FIG. 1, of a main part of the vacuum insulated glass sealing member and its surrounding parts;
[FIG. 3] FIG. 3 is a sectional view illustrating one example of a vacuum insulated glass unit; and
[FIG. 4] FIG. 4 is a schematic representation illustrating a situation in which a flexible portion of a vacuum insulated glass sealing member is flexed.

### Description of Embodiments

### (Embodiment)

A vacuum insulated glass sealing member according to an embodiment of the present disclosure and a refrigerated display case door including the same will now be described with reference to the accompanying drawings. Note that the specific embodiments to be described below are provided just for the purpose of making the true spirit of the present disclosure understandable more easily and should not be construed as limiting the scope of the present disclosure unless otherwise stated. It should also be noted that in the drawings to be referred to in the following description, some constituent elements may have their main part illustrated on a larger scale only for the sake of convenience to allow the reader to understand the features of the present disclosure fully. Therefore, the ratio of the dimensions of respective constituent elements illustrated on the drawings does not always reflect their actual dimensional ratio.

### (Refrigerated Display Case Door)

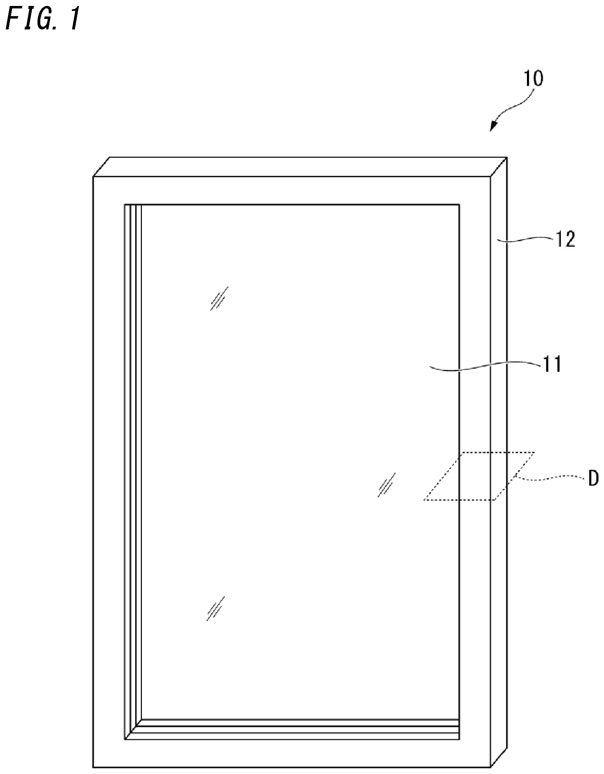

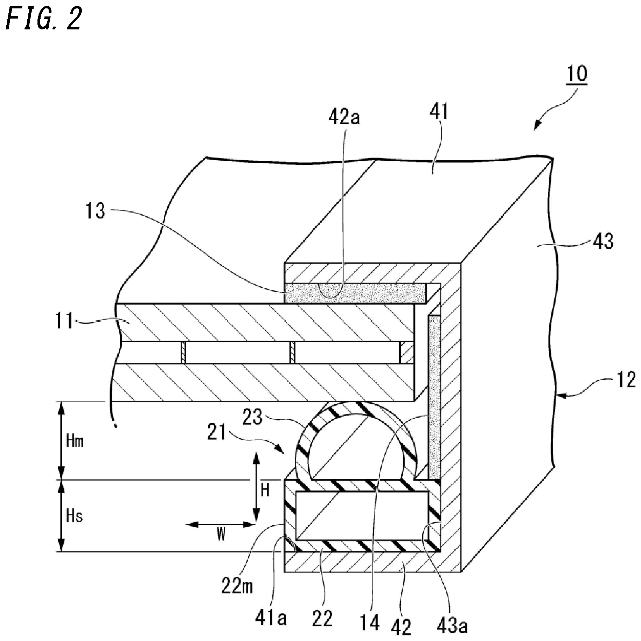

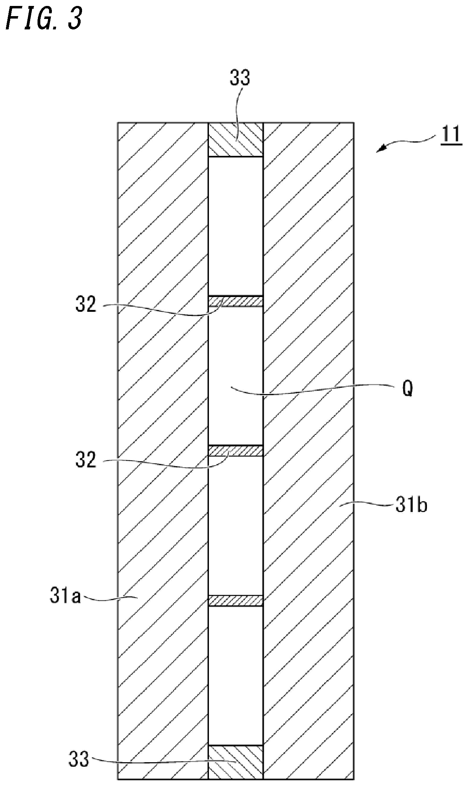

FIG. 1 is a perspective view of a refrigerated display case door using a vacuum insulated glass sealing member according to one embodiment of the present disclosure. FIG. 2 is an enlarged cross-sectional view, taken along the plane D shown in FIG. 1, of a main part of the vacuum insulated glass sealing member and its surrounding parts. FIG. 3 is a sectional view illustrating one example of a vacuum insulated glass unit.

A refrigerated display case door 10 according to one embodiment includes: a vacuum insulated glass unit 11; a frame member (frame) 12 supporting a peripheral edge portion of the vacuum insulated glass unit 11; and a vacuum insulated glass sealing member 21 according to one embodiment. In the following description, the vacuum insulated glass sealing member will be hereinafter simply referred to as a "sealing member 21."

When the refrigerated display case door 10 according to one embodiment is used as an opening and closing door for a refrigerated display case, the refrigerated display case door 10 is mounted to the refrigerated display case such that one side on which the sealing member 21 is disposed forms the outer part of the refrigerated display case.

In the vacuum insulated glass unit 11, a gap is left by arranging a plurality of pillars 32 intermittently between a pair of float glass panes 31a, 31b and respective peripheral edge portions of the float glass panes 31a, 31b are bonded to each other with an adhesive layer 33. The gap between the float glass panes 31a, 31b is supposed to be a vacuum layer Q.

The vacuum insulated glass unit 11 is supposed to ensure thermal insulation properties at least comparable to those of a multi-layer insulated glass unit, even though the vacuum insulated glass unit 11 is, for example, approximately one fourth as thick as the multi-layer insulated glass unit, of which the gap between the multiple glass panes is filled with a gas.

### (Frame Member)

The frame member 12 is a frame-shaped member having a U-cross section perpendicular to the longitudinal axis thereof. The frame member 12 is formed as an integral member including: a pair of side panels 41, 42 facing each other; and a coupling panel 43 that couples one end of one of the pair of side panels 41, 42 to the corresponding end of the other side panel 41, 42. The side panels 41, 42 are preferably arranged parallel to each other. The coupling panel 43 is preferably perpendicular to the side panels 41, 42. Each of the pair of side panels 41, 42 and the coupling panel 43 preferably has a flat plate shape.

The frame member 12 has an opening end facing the coupling panel 43. A peripheral edge portion of the vacuum insulated glass unit 11 enters the inside of the frame member 12 through the opening end. This is how the frame member 12 holds the peripheral edge portion of the vacuum insulated glass unit 11. The frame member 12 is preferably made of a material which is lightweight and has high mechanical strength such as a metal (e.g., an aluminum alloy or stainless steel) or a rigid plastic.

The frame member 12 has a first surface 41a and second surface 42a facing each other. The first surface 41a is the inner surface 41a of the side panel 41. To the first surface 41a, bonded is a base portion 22 (to be described later) of the sealing member 21.

On the second surface 42a of the frame member 12, provided is a seal layer 13. The second surface 42a is the inner surface of the side panel 42.

The seal layer 13 brings the peripheral edge portion of one surface of the vacuum insulated glass unit 11 into hermetic contact with the frame member 12 when the peripheral edge portion of the vacuum insulated glass unit 11 is sandwiched between the seal layer 13 itself and a flexible portion 23 (to be described later) of the sealing member 21. The seal layer 13 is preferably configured as, for example, either a sheet member made of a soft resin or a sheet member made of an elastic material such as rubber.

The frame member 12 further has a third surface 43a that connects the first surface 41a and the second surface 42a to each other. The third surface 43a is the inner surface 43a of the coupling panel 43 of the frame member 12.

It is preferable that the first surface 41a and the second surface 42a be parallel to each other. Also, it is preferable that the third surface 43a be perpendicular to the first surface 41a and the second surface 42a. Furthermore, it is preferable that each of the first surface 41a, the second surface 42a, and the third surface 43a have a planar shape.

On the third surface 43a, provided is a buffer layer 14. The buffer layer 14 either abuts on an end surface of the vacuum insulated glass unit 11 inserted into the frame member 12 or faces, with a gap left, the end surface of the vacuum insulated glass unit 11 inserted into the frame member 12. The buffer layer 14 prevents the end surface of the vacuum insulated glass unit 11 from cracking or chipping by coming into direct contact with the rigid frame member 12. The buffer layer 14 is preferably configured as, for example, a sheet member made of a soft resin or a sheet member made of an elastic material such as rubber.

### (Vacuum Glass Sealing Member)

A sealing member 21 according to one embodiment is a member extending, inside the frame member 12, along the longitudinal axis of the frame member 12 and includes a base portion 22 and a flexible portion 23 fixed to this base portion 22.

### (Base Portion)

The base portion 22 is a member having a polygonal cross section perpendicular to its own longitudinal axis. In one embodiment, the base portion 22 is formed to have a rectangular cross section perpendicular to its own longitudinal axis. The base portion 22 is preferably hollow. The bottom surface of the base portion 22 is bonded to the first surface 41a of the frame member 12 (i.e., the inner surface 41a of the side panel 41). In this manner, the sealing member 21 is fixed to the frame member 12. Note that the surface, facing the third surface 43a of the frame member 12, of the base portion 22 may or may not be bonded to the third surface 43a, whichever is appropriate.

The base portion 22 is preferably made of a material having a higher hardness than a constituent material for the flexible portion 23. A material for the base portion 22 is, for example, a rigid resin. In one embodiment, a rigid polyvinyl chloride resin is used as a constituent material for the base portion 22.

### (Flexible Portion)

The flexible portion 23 is a member having an arcuate cross section perpendicular to its own longitudinal axis. In one embodiment, the flexible portion 23 is formed to have an arc-shaped cross section perpendicular to its own longitudinal axis. Both side end portions of the flexible portion 23 are fixed to the upper surface of the base portion 22. A gap is left between the flexible portion 23 and the base portion 22.

The flexible portion 23 is provided such that the outermost part thereof in a width direction W intersecting at right angles with a height direction H shown in FIG. 2 is located inside an end surface 22m of the base portion 22 in the width direction W (in other words, the end surface 22m aligned with the height direction H). Note that this positional relationship may be maintained in both a situation in which no stress is applied to the flexible portion 23 and a situation in which the flexible portion 23 is flexed in such a manner that the arc-shaped flexible portion 23 is crushed in the height direction H under the stress applied by the vacuum insulated glass unit 11 when the glass unit 11 bends.

The flexible portion 23 is preferably made of a soft material having a lower hardness than the constituent material of the base portion 22. A material for the flexible portion 23 is, for example, a soft resin. In one embodiment, a soft polyvinyl chloride resin is used as a material for the flexible portion 23.

In addition, suppose the height of the base portion 22 in the direction in which the base portion 22 and the flexible portion 23 are stacked one on top of the other, i.e., the height direction H, is designated by the reference sign "Hs" and the height of the flexible portion 23 in the height direction H is designated by the reference sign "Hm." In that case, the base portion 22 and the flexible portion 23 are preferably formed such that the ratio of Hs to Hs + Hm (i.e., the ratio of the height of the base portion 22 to the overall height of the vacuum insulated glass sealing member 21) is equal to or greater than 40% to equal to or less than 65%. Note that this ratio range is preferably met at least before the sealing member 21 is assembled into the frame member 12.

It is preferable that the base portion 22 and flexible portion 23 of the sealing member 21 according to one embodiment be formed as an integral member. In other words, it is preferable that the sealing member 21 as an integral member include the base portion 22 and the flexible portion 23. For example, the sealing member 21 may be obtained by co-extrusion molding of dissimilar materials, namely, a rigid polyvinyl chloride resin (as a material for the base portion 22) and a soft polyvinyl chloride resin (as a material for the flexible portion 23).

### (Advantage)

As can be seen from the foregoing description, a refrigerated display case door 10 using a vacuum insulated glass sealing member 21 according to one embodiment allows for reducing, by keeping the shape of the sealing member 21 unchanged as much as possible, the chances of causing a decline in its thermal insulation properties due to, for example, the leakage of cold air through the frame member 12, even if the stress applied to the sealing member 21 increases when the refrigerated display case door 10 uses a vacuum insulated glass unit 11 which is thinner than a known multi-layer insulated glass unit and which will bend significantly owing to a temperature difference between the inside and outside of the refrigerated case.

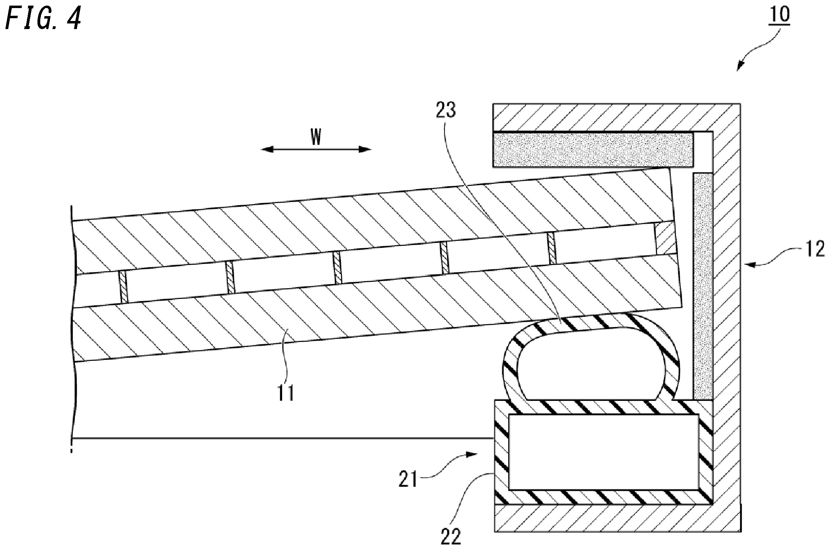

For example, stress may be applied to the sealing member 21 when a center portion of the vacuum insulated glass unit 11 bends to protrude due to the temperature difference between the inside and outside of the refrigerated display case door 10 to cause a peripheral edge portion of the vacuum insulated glass unit 11 to tilt with respect to the width direction W as illustrated schematically in FIG. 4. Even in that case, the sealing member 21, including a rigid base portion 22 and a flexible portion 23 softer than the base portion 22, may still cope with the bend and deformation of the vacuum insulated glass unit 11 by flexing the flexible portion 23 while making the base portion 22 keep the shape of the sealing member 21 unchanged as much as possible.

This reduces the chances that a gap appears between the refrigerated display case door 10 and the refrigerated showcase body, thereby reducing the chances of causing a decline in its thermal insulation properties. In addition, the rigid base portion 22 of the sealing member 21 may also reduce the chances of bringing about a situation where the shape of the sealing member 21 cannot be maintained due to the deformation of the overall sealing member 21.

In addition, the outermost part of the flexible portion 23 in the width direction W is located inside the end surface 22m of the base portion 22, which prevents the flexible portion 23 from protruding too much out of the frame member 12 in the width direction W, even if the flexible portion 23 is flexed when the vacuum insulated glass unit 11 bends. Thus, this allows for avoiding, even if the refrigerated display case door 10 is assembled such that the sealing member 21 is located in the outer part of the refrigerated display case, an unwanted situation where that protruding part of the flexible portion 23 is clearly visible from outside of the case, thus achieving the advantage of improving the appearance of the refrigerated display case door 10 significantly.

### (Variations)

In the embodiment described above, the base portion 22 of the sealing member 21 has a rectangular cross-sectional shape. However, this should not be construed as limiting. The base portion 22 of the sealing member 21 only needs to have a polygonal cross-sectional shape and may also have, for example, a rectangular cross-sectional shape, a triangular cross-sectional shape, a pentagonal cross-sectional shape, or a hexagonal cross-sectional shape. The cross-sectional shape of the base portion 22 is not limited to any particular shape as long as the base portion 22 may support the flexible portion 23 and may reduce the deformation even in a situation where stress is applied due to bending of the vacuum insulated glass unit 11.

Also, in the embodiment described above, the flexible portion 23 forming part of the sealing member 21 has an arc-shaped cross section. However, this should not be construed as limiting. The flexible portion 23 may also have any other arcuate cross-sectional shape. The flexible portion 23 may also have, for example, a semi-circular cross-sectional shape, an arc cross-sectional shape, of which the inscribed angle is less than 180 degrees, an arc cross-sectional shape, of which the inscribed angle is greater than 180 degrees, or an oval shape. Any appropriate cross-sectional shape may be selected for the flexible portion 23 depending on various conditions including the deformation of the flexible portion 23 that has been flexed or its mechanical strength.

Note that if the flexible portion 23 has an arc-shaped cross-sectional shape, the area of contact between the flexible portion 23 and the vacuum insulated glass unit 11 increases compared to, for example, a situation where the flexible portion 23 has a triangular cross-sectional shape. Thus, this reduces the chances that the vacuum insulated glass unit 11 slips on the flexible portion 23.

Also, in the embodiment described above, the sealing member 21 is bonded to the frame member 12. However, this should not be construed as limiting. Alternatively, the sealing member 21 may also abut on the frame member 12, instead of being bonded to the frame member 12. In that case, the sealing member 21 may be fixed to the frame member 12 by fitting the vacuum insulated glass unit 11 into the sealing member 21.

Note that the embodiment and its variations described above are only an exemplary one of various embodiments of the present disclosure and its variations and should not be construed as limiting the scope of the present disclosure. Rather, the exemplary embodiment and its variations may be implemented in various other forms and readily subjected to various modifications, changes, omissions, and replacements without departing from the true spirit and scope of the present disclosure. Note that the embodiment and its variations fall within not only the true spirit and scope of the present disclosure but also the scope of the subject-matter of the appended claims and their equivalents.

### (Aspects)

As can be seen from the foregoing description of one embodiment and its variations, a vacuum insulated glass sealing member (21) according to a first aspect includes a base portion (22) and a flexible portion (23) having a side end portion fixed to the base portion (22). The base portion (22) has a polygonal cross section perpendicular to a longitudinal axis of the base portion (22). The flexible portion (23) has an arcuate cross section perpendicular to a longitudinal axis of the flexible portion (23). The flexible portion (23) has a lower hardness than the base portion (22).

In a vacuum insulated glass sealing member (21) according to a second aspect, which may be implemented in conjunction with the first aspect, the base portion (22) has a rectangular cross section perpendicular to the longitudinal axis of the base portion (22). The flexible portion (23) has an arc-shaped cross section perpendicular to the longitudinal axis of the flexible portion (23).

In a vacuum insulated glass sealing member (21) according to a third aspect, which may be implemented in conjunction with the first or second aspect, the base portion (22) and the flexible portion (23) have been molded as an integral member.

In a vacuum insulated glass sealing member (21) according to a fourth aspect, which may be implemented in conjunction with any one of the first to third aspects, a ratio of the height (Hs) of the base portion (22) to an overall height of the vacuum insulated glass sealing member (21) is equal to or greater than 40% to equal to or less than 65%.

In a vacuum insulated glass sealing member (21) according to a fifth aspect, which may be implemented in conjunction with any one of the first to fourth aspects, an outermost part of the flexible portion (23) in a width direction (W) is located inside an end surface (22m) of the base portion (22) in the width direction (W).

In a vacuum insulated glass sealing member (21) according to a sixth aspect, which may be implemented in conjunction with any one of the first to fifth aspects, the base portion (22) is made of a rigid polyvinyl chloride resin. The flexible portion (23) is made of a soft polyvinyl chloride resin.

A refrigerated display case door (10) according to a seventh aspect includes: the vacuum insulated glass sealing member (21) according to any one of the first to sixth aspects; a frame member (12) having not only a U-cross section perpendicular to a longitudinal axis of the frame member (12) but also a first surface (41a) and a second surface (42a) that face each other; and a vacuum insulated glass unit (11). The base portion (22) of the vacuum insulated glass sealing member (21) is fixed to the first surface (41a) of the frame member (12). A peripheral edge portion of the vacuum insulated glass unit (11) is held between the second surface (42a) of the frame member (12) and the flexible portion (23).

In a refrigerated display case door (10) according to an eighth aspect, which may be implemented in conjunction with the seventh aspect, the frame member (12) further has a third surface (43a) connecting the first surface (41a) and the second surface (42a) to each other. A buffer layer (14) is provided on the third surface (43a). The buffer layer (14) is configured to abut on an end surface of the vacuum insulated glass unit (11) in a thickness direction.

In a refrigerated display case door (10) according to a ninth aspect, which may be implemented in conjunction with the seventh or eighth aspect, a seal layer (13) is provided on the second surface (42a) of the frame member (12) to face the flexible portion (23) of the vacuum insulated glass sealing member (21).

### Reference Signs List

- 10: Refrigerated Display Case Door
- 11: Vacuum Insulated Glass Unit
- 12: Frame Member (Frame)
- 13: Seal Layer
- 14: Buffer Layer
- 21: Sealing Member (Vacuum Insulated Glass Sealing Member)
- 22: Base Portion
- 22m: End Surface
- 23: Flexible Portion
- 41a: First Surface
- 42a: Second Surface
- 43a: Third Surface
- H: Height Direction
- W: Width Direction
- Hs: Height of Base Portion

## Claims

1. A vacuum insulated glass sealing member comprising:
a base portion; and
a flexible portion having a side end portion fixed to the base portion,
the base portion having a polygonal cross section perpendicular to a longitudinal axis of the base portion,
the flexible portion having an arcuate cross section perpendicular to a longitudinal axis of the flexible portion, and
the flexible portion having a lower hardness than the base portion.

2. The vacuum insulated glass sealing member of claim 1, wherein
the base portion has a rectangular cross section perpendicular to the longitudinal axis of the base portion, and
the flexible portion has an arc-shaped cross section perpendicular to the longitudinal axis of the flexible portion.

3. The vacuum insulated glass sealing member of claim 1 or 2, wherein
the base portion and the flexible portion have been molded as an integral member.

4. The vacuum insulated glass sealing member of claim 3, wherein
a ratio of a height of the base portion to an overall height of the vacuum insulated glass sealing member is equal to or greater than 40% to equal to or less than 65%.

5. The vacuum insulated glass sealing member of claim 3, wherein
an outermost part of the flexible portion in a width direction is located inside an end surface of the base portion in the width direction.

6. The vacuum insulated glass sealing member of claim 1 or 2, wherein
the base portion is made of a rigid polyvinyl chloride resin, and
the flexible portion is made of a soft polyvinyl chloride resin.

7. A refrigerated display case door comprising:
the vacuum insulated glass sealing member of claim 1 or 2;
a frame member having not only a U-cross section perpendicular to a longitudinal axis of the frame member but also a first surface and a second surface that face each other; and
a vacuum insulated glass unit,
the base portion of the vacuum insulated glass sealing member being fixed to the first surface of the frame member, and
a peripheral edge portion of the vacuum insulated glass unit being held between the second surface of the frame member and the flexible portion.

8. The refrigerated display case door of claim 7, wherein
the frame member further has a third surface connecting the first surface and the second surface to each other, and
a buffer layer is provided on the third surface, the buffer layer being configured to abut on an end surface of the vacuum insulated glass unit in a thickness direction.

9. The refrigerated display case door of claim 7, wherein
a seal layer is provided on the second surface of the frame member to face the flexible portion of the vacuum insulated glass sealing member.
